# EUROPEAN PATENT SPECIFICATION

(11) **EP 3 468 350 B1**
(45) Date of publication and mention of the grant of the patent: **02.09.2020**
(21) Application number: 17731328.5
(22) Date of filing: 07.06.2017
(51) Int. Cl.: A01J 5/017

(54) **A MILKING CYLINDER UNIT AND A MILKING APPARATUS PROVIDED WITH SUCH A UNIT**
MELKZYLINDEREINHEIT UND MELKVORRICHTUNG MIT SOLCH EINER EINHEIT
UNITÉ CYLINDRE DE TRAITE ET APPAREIL DE TRAITE MUNI D'UNE TELLE UNITÉ

(30) Priority: 08.06.2016 SE 1650801
(43) Date of publication of application: 17.04.2019
(73) Proprietor: DeLaval Holding AB, 147 21 Tumba (SE)
(72) Inventor: JAROSIK, Waldemar, 147 21 Tumba (SE); WOLANSKI, Mariusz, 147 21 Tumba (SE)
(74) Representative: Lilliehorn, Tobias
(86) International application number: PCT/SE2017/050605
(87) International publication number: WO 2017/213577

(56) References cited:
- EP-B1- 1 679 955
- US-A1- 2015 114 299

## Description

### TECHNICAL FIELD

The present invention relates to a milking cylinder unit comprising: a cylinder, a piston, displaceably arranged in the cylinder, a flexible element, connected to the piston and in one end connected to a milking cluster, wherein, in a non-active position of the cluster, the cluster by its own weight generates a pulling force on the flexible element, and at least one sensing element, wherein the sensing element is arranged to detect a relief of the pulling force on the flexible element to trigger displacement of the piston in the cylinder. This kind of cylinder unit is sometimes referred to as an ACR (Automatic Cluster Removal) cylinder.

The invention also relates to a milking apparatus comprising such a milking cylinder unit.

### BACKGROUND

Contemporary milking apparatuses, which are used for the purpose of milking cows in an industrial scale, normally comprise a so called milking cluster which, in its operative position, is attached to the teats of the cow, and which, via a hose is connected to a milk pumping and collecting arrangement. In a non-operative position of the milking cluster, the latter hangs at least partly suspended by a cord extending from a so called milking cylinder unit.

The milking cylinder unit comprises a cylinder, a piston which is displaceable in the cylinder, and a cord which extends along a path from the piston to the milking cluster, to which it is attached. Inside the cylinder there may be provided one or more pulleys by which the cord is supported and redirected, said cord and pulleys thereby defining a winch.

The cylinder is connected to a vacuum source. By application of vacuum inside the cylinder, the piston is held in a locked position in which it cannot be displaced and in which the cord is prevented from being pulled out from the cylinder. Normally, this corresponds to the non-active position of the milking cluster in which the latter is suspended by the cord. The cylinder unit also comprises means, such as a pilot valve and a ventilation valve, for relieving the vacuum inside the cylinder. When the vacuum is removed from the cylinder, the piston can be displaced inside the cylinder and the cord thereby be pulled out of the cylinder. The vacuum-relieving means may be arranged so as to relieve the vacuum upon detection of a relief of a pulling force exerted by the milking cluster on the cord when in its non-operative position.

When a milking session is to start, an operator grips the milking cluster, thereby relieving at least a part of the pulling force generated by the milking cluster on the cord. Thereby the vacuum relieving means is assumed to relieve the vacuum inside the cylinder and permit the cord to be pulled out of the cylinder and the milking cluster to be moved to the position of the teats of the cow to be milked. According to earlier technical solutions, there were not detecting means provided for detecting the relief of the pulling force of the milking cluster, but the operator had to manually operate a push button in order to activate the vacuum relief, something that becomes rather tiresome when it has to be repeated often and in combination with the simultaneous lifting or swinging of the cluster. However, later technical solutions include automatic detection of relief of the pulling force and thus eliminate this extra operation of the operator.

### BACKGROUND ART

According to prior art, such as disclosed by EP1679955, a sensing element is provided for the purpose of sensing a small displacement of an end of the cord connected to the piston as a result of a relief of the pulling force on the cord exerted by the milking cluster. A first cord end extends through the piston and is anchored to a sleeve inside the cylinder. A spring is provided between the sleeve and the piston, and upon relief of the pulling force generated by the milking cluster, a biasing force of the spring causes a small displacement of the sleeve inside the cylinder. Up to that point the piston is locked in its position by a vacuum applied inside the cylinder and pull out of the cord from the cylinder is prevented. The displacement of the sleeve is sensed by a sensor, which activates a pilot valve that opens a rapid ventilation valve that permits air to flow into the cylinder, thereby relieving the vacuum and permitting displacement of the piston and pull out of the cord from the cylinder. As an alternative to the provision of the sleeve, the cord could of course be anchored to the piston itself, which should then be spring-loaded. Thereby, a corresponding small displacement of the piston itself upon relief of the pulling force generated by the milking cluster could be sensed for the purpose of triggering the opening of the valves.

However, it has been noted that, for prior art solutions, a relief of the pulling force generated by the milking cluster does not always result in the requested permission to pull out the cord from the cylinder to enable a start of a milking session. The present invention aims at solving that problem.

### SUMMARY OF THE INVENTION

The above-mentioned problem is solved by means of: a milking cylinder unit according to claim 1 comprising a cylinder, a piston, displaceably arranged in the cylinder, a flexible element, connected to the piston and in one end connected to a milking cluster, wherein, in a non-active position of the cluster (i.e. retracted from a cows udder), the cluster by its own weight generates a pulling force on the flexible element, and at least one sensing element, wherein the sensing element is arranged to detect a relief of the pulling force on the flexible element to trigger displacement of the piston in the cylinder, the milking cylinder unit being characterised in that the sensing element comprises a redirecting member by which the flexible element is supported and redirected, wherein the flexible element applies a force on the redirecting member as a result of the pulling force generated thereon by the cluster, and that said redirecting member is separate from the piston and arranged along the path of the flexible element between the piston and the end connected to the cluster.

Prior art uses a sensor arranged in the proximity of the piston to sense a small displacement of the piston itself or of a sleeve connected thereto and attached to the cord (said sleeve being positioned not between the piston and the end of the cord, but on the opposite side of the piston as seen in path of the cord). That displacement, when originating from a relief of the pulling force generated by the milking cluster, could be disturbed and hindered by a number of factors, such as friction between the cord and different parts, such as the piston, pulleys that are provided between the piston and the cord end connected to the milking cluster, internal friction of such pulleys, vacuum pressure level in the cylinder, friction between piston and cylinder etc. Accordingly, a relief of the pulling force generated by the milking cluster may not result in the requested corresponding small displacement of the sleeve or piston that is to be sensed by the sensing element to trigger the vacuum relief. The present invention suggests an integration of the sensing element with a structural member, in this case a redirecting member, closer to the source of the pulling force as seen in the path of the flexible element, thereby reducing the risk of not sensing a relief of the pulling force due to the influence of any of the factors mentioned above.

The redirecting member may be a rotational wheel or pulley the periphery of which supports the flexible element, but may alternatively be a fixed (non-rotational) member by which the flexible element is supported and guided. The flexible element could be any suitable elongated member, preferably a cord or wire, able of following a curved path and of carrying the load of a milking cluster. The sensing element could have a wire connection or a wireless connection to any suitable means for change of pressure in the cylinder as a response to a signal from the sensing element about a sensed relief of the pulling force. Alternatively, the connection could be a pure mechanical connection between the sensing element and any such means. Depending on the design of the cylinder, the pressure change may be a pressure increase therein caused by relief of vacuum by means of introduction of air into the cylinder. However, in its widest scope, the invention is not restricted to such a design. The term "between" as used when defining the position of the redirecting member in relation to the piston and the end of the flexible element connected to the cluster does not mean physically between but "between" as seen along the path of the flexible element from one end thereof to the other. Depending on the operating position of the cylinder, the piston could in fact be physically closer to the milking cluster than is the redirecting member of the sensing element, while the latter is still located between the piston and the cluster as seen along the path of the flexible element.

According to one embodiment, the milking cylinder unit is characterised in that, along the path of the flexible element, between the redirecting member and the piston there is provided at least one further redirecting member by which the flexible element is supported and redirected. The at least one further redirecting member could be a rotational member such as a pulley, or a non-rotational member. The more redirecting members there are between the sensing element and the piston the more will the invention be advantageous compared to prior art, since such members are likely to disturb the function of prior art solutions.

According to one embodiment, the redirecting member is moveably arranged, so as to move as a response to a relief of the pulling force generated by the cluster on the flexible element. The motion aimed at could be a rotating motion of the redirecting member if the latter is a rotational member such as pulley. According to one aspect, however, the motion aimed at is a linear motion. As a consequence of the redirecting member having a supporting and redirecting function with regard to the flexible element, a force will be applied thereon by the flexible element as the latter is subjected to the pulling force generated by the milking cluster. By providing for a motion of the redirection member as a response to a change in that force, efficient sensing and detection of relief of pulling force is provided for.

According to one embodiment the sensing element comprises a sensor that senses a motion of the redirecting member caused by a relief of the pulling force generated by the cluster on the flexible element. The sensor could be any suitable kind of sensor for sensing the motion or position of the redirecting member, such as a magnetic sensor, a piezoelectric sensor, a proximity sensor etc.

According to one embodiment, the redirecting member is movable in a direction towards and away from the sensor. The motion is a linear motion.

According to one embodiment the sensing element comprises a biasing member exerting a biasing force on the redirecting member counteracting the force applied by the flexible element on the redirecting member. The biasing member could be a magnet, a spring, a weight or any other member by means of which a biasing force counteracting the force applied by the flexible element can be applied to the redirecting member. The biasing member is arranged so as to apply a biasing force in the motion direction of the redirecting member, which, according to one embodiment, could be a linear direction towards the sensor. The provision of the biasing member, the sensor, and the linear mobility of the redirecting member provides for an accurate and reliable detection of a relief of the pulling force of the milking cluster on the flexible element.

According to one embodiment the redirection member is movably arranged by being slideably arranged in guide in a mounting member, in which the redirecting member is mounted. A very stable and non-complicated design can thereby be obtained. According to one aspect the redirecting member is a pulley, and an axle of the pulley engages said guide. Thereby both rotational motion and linear motion of the redirecting member is provided for, the rotational motion being used for the frictionless forwarding of the flexible element and the linear motion being used for sensing a relief of the pulling force of milking cluster. The guide may be a slot or groove provided in the mounting member, preferably in arms provided on opposite sides of the redirecting member, such that a stable positioning and guiding of the redirecting member is achieved.

According to one embodiment the redirecting member is mounted in a mounting member attached to said cylinder on the outside thereof. By having the redirecting member arranged outside the cylinder, access thereto is facilitated. Regardless of the position of the cylinder, which may be horizontal, vertical or other, the position of the redirecting member should be such that a relief of the pulling force generated by the milking cluster is reliably detected by the sensing element. Having the redirecting member mounted on the outside of the cylinder enables optimal positioning of the redirecting member with regard to the positioning of the cylinder and the milking cluster respectively, such that the force generated thereon by the flexible member and a relief of that force caused by relief of the pulling force generated by the cluster is easily detectable. Maintenance work and substitution of the redirecting member, mounting member or sensor is also facilitated. The mounting member may be a console that is removably attached to the cylinder, for example by means of a screw joint. Preferably, the mounting member also carries the biasing member and the sensor.

According to an alternative embodiment the redirecting member is mounted in a mounting member arranged at a distance from the cylinder on the outside thereof. Thereby, the cylinder can be located more remotely from the area of the milking cluster while the sensing element, comprising the redirecting member, is close to the origin of the pulling force, i.e. the milking cluster.

According one embodiment, the redirecting member is a wheel the periphery of which supports and redirects the flexible element.

According to one embodiment, the milking cylinder unit comprises a further redirecting member provided between the redirecting member and the end of the flexible element that is connected to the cluster. According one aspect the further directing member defines a fixed point with regard to the redirecting member, from which the flexible element extends towards the cluster. Thereby, provided that the cylinder and the sensing element have a fixed position, the angles with which the flexible element enters and leaves the redirecting member of the sensing element can be constant, regardless of a position change of the milking cluster, which will swing into different positions. Thereby, the force applied by the flexible element on the redirecting member of the sensing element will have the same direction regardless of the position of the milking cluster, contributing to a more reliable detection of relief of the pulling force generated by the milking cluster.

According to one embodiment, the cylinder is connected to a vacuum source which provides a vacuum in the cylinder that holds the piston in a locked position as long as the pulling force generated by the cluster is not relieved, and the cylinder is provided with at least one air inlet valve, and means arranged to initiate opening of said valve upon detection by the sensing element of a relief of the pulling force generated by the cluster on the flexible element and thereby to reduce said vacuum in the cylinder and enable displacement of the piston therein. The means arranged to initiate opening of the air inlet valve may comprise a control unit that is operatively connected to the sensing element and that controls the operation of the air inlet valve. There may be provided a pilot valve, preferably a solenoid valve, which is directly controlled by the control unit, whereby the activation of the pilot valve triggers an opening of air inlet valve, the air inlet valve thereby being indirectly controlled by the control unit. When a milking session is over and the milking cluster is removed to its inactive position hanging freely and supported by the flexible element, the control unit controls the pilot valve and valve such that they are closed and the vacuum source is once again able of generating a vacuum in the cylinder, thereby pulling back the piston to its locked starting position in which at least a part of the flexible element is returned into the cylinder by the pulling action of the piston. The vacuum source could be a vacuum pump or the like connected to the cylinder through a conduit, and there may be provided a valve in the conduit, possibly controlled by the control unit, for shutting off fluid communication between the vacuum source and the cylinder in connection to the opening of the air inlet valve.

The object of the invention is also achieved by means of a milking apparatus according to claim 14, comprising a milking cylinder unit according to the invention, said milking apparatus being characterised in that it comprises a vacuum source which is connected to said cluster, and means for initiating a milking activity of said milking apparatus through the vacuum source and the cluster as an answer to a relief of the pulling force generated by the cluster on the flexible element sensed by the sensing element. The vacuum source connected to the milking cluster may be the same source as the vacuum source connected to the cylinder. The means for initiation of the milking activity may comprise a control unit provided to receive a signal from the sensing element and provided to initiate the milking activity within a predetermined delay period as counted from receipt of such signal, or from an estimated time from the of the relief of the pulling force generated by the milking cluster on the flexible element. The operation of the milking cluster, after initiation of its milking activity, may follow general principles used in contemporary milking apparatuses, using a milking meter for measuring total quantity of milk and instant milking rate. Milking activity is ended when a predetermined threshold value of the milking rate is obtained. Thereby, the action of the vacuum source on the milking cluster is ended, whereby the milking cluster leaves the udder of the cow and swings away to its non-active position suspended by the flexible element of the milking cylinder unit.

Further features and advantages of the present invention will be presented in the following detailed description of exemplifying embodiments of the invention with reference to the annexed drawing.

### BRIEF DESCRIPTION OF THE DRAWINGS

Fig. 1 is a schematic representation of a milking cylinder unit according to the invention, connected to a milking cluster,
Fig. 2 is a detailed view of a sensing element of the milking cylinder unit, in a first position,
Fig. 3 is a detailed view of the sensing element shown in fig. 3, in a second position,
Fig. 4 is a schematic representation of a milking cylinder unit according to an alternative embodiment of the invention,
Fig. 5 is a schematic representation of a milking apparatus according to the invention, and
Fig. 6 is a representation of a milking apparatus arrangement in which a plurality of milking apparatuses according to the invention may be arranged.

### DETAILED DESCRIPTION OF EXAMPLIFYING EMBODIMENTS

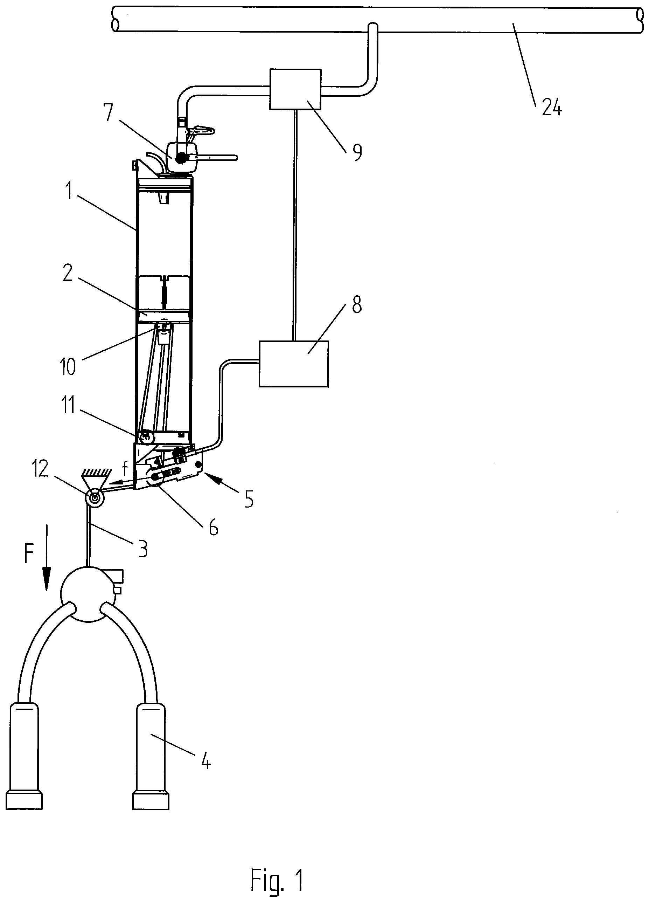

Fig. 1 shows a milking cylinder unit comprising: a cylinder 1, a piston 2, displaceably arranged in the cylinder 1, a flexible element 3, connected to the piston 2 and in one end connected to a milking cluster 4. In a non-active position of the cluster 4, in which the cluster 4 is retracted from a cows udder, the cluster 4 by its own weight generates a pulling force F on the flexible element 3. The milking cylinder unit also comprises at least one sensing element 5, wherein the sensing element 5 is arranged to detect a relief of the pulling force F on the flexible element 3 to trigger displacement of the piston 2 in the cylinder 1. The displacement of the piston 2 will be dependent on the pulling force applied to the end of the flexible element 3 connected to the milking cluster 4.

The displacement of the piston 2 includes a displacement that allows the flexible element 3 to be pulled out of the cylinder, typically for the purpose of moving the milking cluster 4 to an active milking position in which it is attached to the teats of a cow. Typically such moving of the milking cluster 4 is performed manually by an operator. The foregoing relief of the pulling force F that triggers the enablement of displacement of the piston 2 is typically the result of manual handling of the milking cluster 4 by an operator.

The cylinder 1 is connected to a vacuum source 24 which provides a vacuum in the cylinder 1 that holds the piston 2 in a locked position as long as the pulling force F generated by the cluster 4 is not relieved. Furthermore, the cylinder 1 is provided with at least one air inlet valve 7, and means, in this embodiment a control unit 8 and a pilot valve 9, arranged to initiate opening of said air inlet valve 7 upon detection by the sensing element 5 of a relief of the pulling force F generated by the cluster 4 on the flexible element 3 and thereby to reduce said vacuum in the cylinder 1 and enable displacement of the piston 2 therein. In the embodiment shown in fig. 1, the pilot valve 9 comprises a control valve arranged in a conduit leading from the cylinder 1 to the vacuum source 24. The control unit 8 is arranged to initiate closure of fluid communication between the cylinder 1 and the vacuum source 24 upon the detection of a relief of the pulling force F by the sensing element 5. Closure of said communication is done by closure of the control valve/pilot valve 9, whereby opening of the air inlet valve 7 is initiated. For this purpose, the control unit 8 is operatively connected to the sensing element 5 and to the control valve/pilot valve 9. Operatively connected may include a wire connection or a wireless connection. In the embodiment shown in fig. 1, the connection control unit 8 and the sensing element 5 and control valve/pilot valve 9 respectively is indicated as a wire connection.

The sensing element 5 comprises a redirecting member 6 by which the flexible element 3 is supported and redirected, wherein the flexible element 3 applies a force f on the redirecting member 6 as a result of the pulling force F generated thereon by the cluster 4. The redirecting member 6 is separate from the piston 2 and arranged along the path of the flexible element 3 between the piston 2 and the end connected to the cluster 4.

In the embodiment shown in fig. 1 the redirecting member 6 is a rotational wheel or pulley the periphery of which supports the flexible element. The flexible element 3 is an elongated member, preferably a cord or wire, able of following a curved path and of carrying the load of a milking cluster 4.

Along the path of the flexible element 3, between the redirecting member 6 and the piston 2 there is provided two further redirecting members 10, 11 by which the flexible element 3 is supported and redirected. The further redirecting members 10, 11 are rotational members, here defined by pulleys, but could, alternatively, be non-rotational members. The further redirecting members 10, 11 are arranged in a part of the cylinder 1 which is separated by the piston 2 from the part thereof that is connected to and communicates with the vacuum source 24. A first 10 of said further redirecting members 10, 11 is connected to the piston 2, while the other further redirecting member 11 is connected to an end wall of the cylinder 1. In said end wall there is also provided an opening through which the flexible element 3 enters/exits the cylinder 1. A first end of the flexible element 3 is connected to the piston 2, in this embodiment by being connected to a part of the first further redirecting member 10. From said first end the flexible element 3 extends to the second further redirecting element 11, by which it is redirected and extends along its path to the first further redirecting element 10, by which it is redirected and extends to the redirecting member 6 of the sensing element 5.

According to one embodiment shown in fig. 1, the milking cylinder unit comprises a further redirecting member 12 provided between the redirecting member 6 of the sensing element 5 and the end of the flexible element 3 that is connected to the milking cluster 4. The further directing member 12 defines a fixed point with regard to the redirecting member 6 of the sensing element 5, from which the flexible element 3 extends towards the cluster 4. The further redirecting member 12 is a rotational member, defined by a pulley.

The redirecting member 6 is moveably arranged, so as to move as a response to a relief of the pulling force F generated by the cluster 4 on the flexible element 3. The motion is a linear motion. As previously mentioned, a force f will be applied on the redirecting member 6 by the flexible element 3 as a result of the latter being subjected to the pulling force F generated by the milking cluster 4. The redirection member 6 will move as a response to a change of that force f.

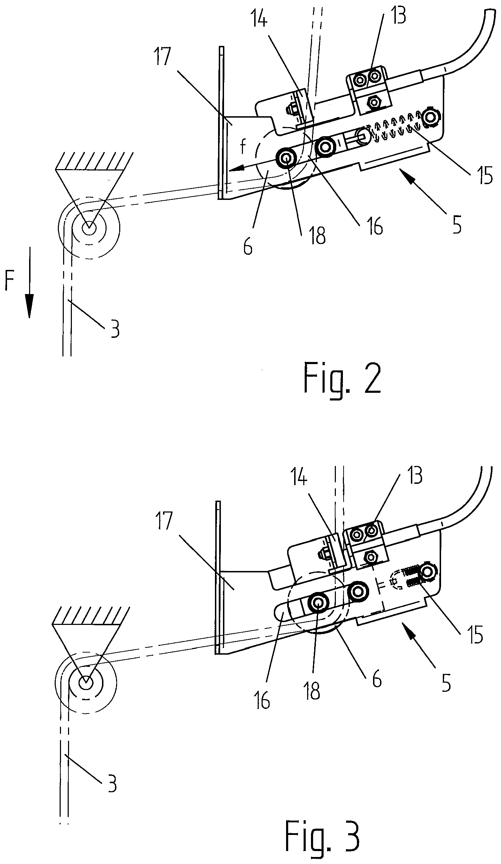

As can be seen in figs. 2, and 3, which show detailed views of the sensing element 5, the sensing element 5 comprises a sensor 13 that senses a motion of the redirecting member 6 caused by a relief of the pulling force F generated by the cluster 4 on the flexible element 3. The sensor 13 could be any suitable kind of sensor for sensing the motion or position of the redirecting member. In the exemplifying embodiment, the sensor 13 is magnetic sensor arranged to sense when a metallic member 14, connected to the redirecting member 6 and moveable together therewith, comes within a predetermined distance from the sensor 13 as a result of the motion of the redirection member 6 caused by the relief of the pulling force F. Thus, the redirecting member 6 is movable in a direction towards and away from the sensor 13, said motion being a linear motion.

According to the embodiment shown in figs. 2 and 3, the sensing element 5 comprises a biasing member 15 exerting a biasing force on the redirecting member 6 counteracting the force f applied by the flexible element 3 on the redirecting member 6. In this specific embodiment, the biasing member 15 is a spring. The biasing member 15 is arranged so as to apply a biasing force in the motion direction of the redirecting member 6.

According to the embodiment shown in figs. 2 and 3, the redirection member 6 is movably arranged by being slideably arranged in guide 16 in a mounting member 17, in which the redirecting member 6 is mounted. Here, the redirecting member 6 is a pulley, and an axle 18 of the pulley engages said guide 16. Thereby both rotational motion and linear motion of the redirecting member 6 is provided for, the rotational motion being used for the frictionless forwarding of the flexible element 3 and the linear motion being used for sensing a relief of the pulling force F of the milking cluster 4. The guide 16 is a slot provided in the mounting member 17, preferably in arms provided on opposite sides of the redirecting member. In figs. 2 and 3 however, only the arm on one side of the redirecting member 6 is visible.

In the embodiment of fig. 1, the mounting member 17 in which the redirecting member 6 is mounted is attached to the cylinder 1 on the outside of the latter. The mounting member 17 defines a console that is removably attached to the cylinder 1, for example by means of a screw joint.

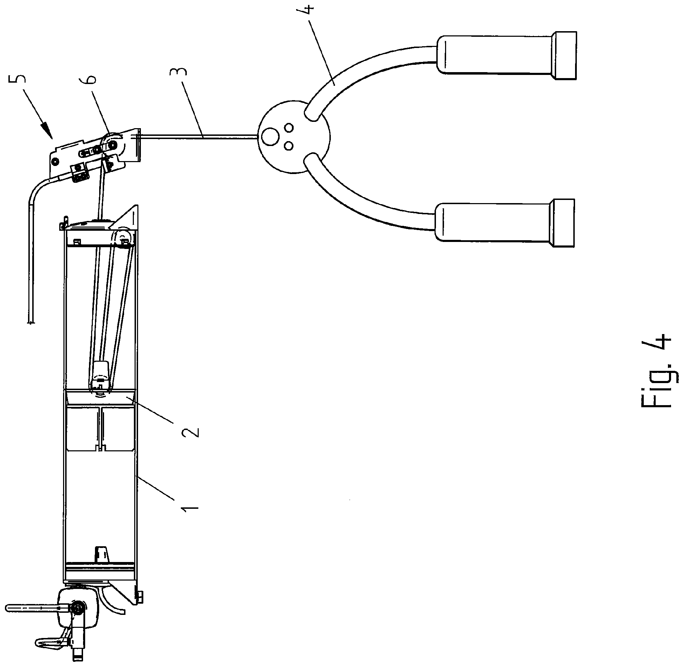

Fig. 4 shows an alternative embodiment which differs from the embodiment shown in fig. 1 in the sense that it suggests that the mounting member 17 is arranged at a distance from the cylinder 1 on the outside thereof. Thereby, the cylinder 1 can be located more remotely from the area of the milking cluster 4 while the sensing element 5, comprising the redirecting member 6, is close to the origin of the pulling force F, i.e. the milking cluster 4. The embodiment of fig. 4 also differs in the sense that it suggest that there is no further redirecting member between the redirecting member 6 of the sensing element 5 and the milking cluster 4, such that, in its non-active position, the milking cluster 4 is hanging in the flexible element immediately below the redirecting member 6 of the sensing element. In the embodiment of fig. 4, the cylinder axis extends horizontally, while in the embodiment of fig. 1 the cylinder axis extends vertically. However, it should be understood that the invention is not delimited to the positioning of the cylinder, which could be any one as long as the functionality of the sensing element 5 is achieved.

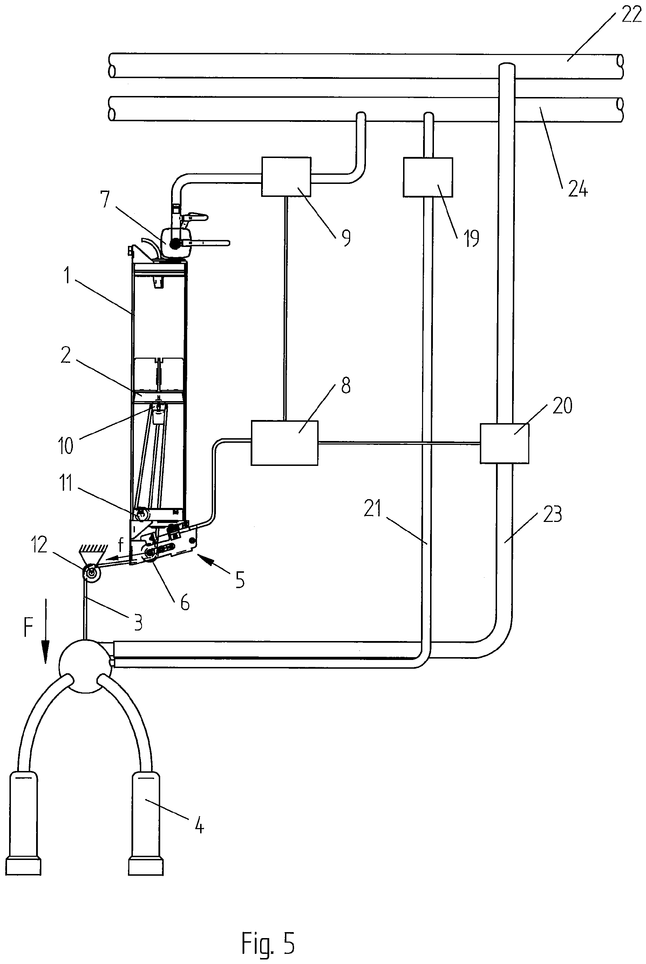

Fig. 5 shows a milking apparatus, comprising a milking cylinder unit according to the invention. In the exemplifying embodiment shown in fig. 5, the milking cylinder unit is the milking cylinder unit according to the embodiment shown in fig. 1 and described hereinabove with reference thereto. Therefore, identical reference numbers are used for the milking cylinder unit of fig. 5 as for the milking cylinder unit shown in fig. 1. The milking apparatus comprises a vacuum source, which, here, is identical with the previously mentioned vacuum source 24, which is connected to said milking cluster 4, and means 8, 19, 20 for initiating a milking activity of said milking apparatus through the vacuum source 24 and the cluster 4 as an answer to a relief of the pulling force F generated by the cluster 4 on the flexible element 3 sensed by the sensing element 5.

The milking cluster 4 is connected to the vacuum source 24 through a first conduit 21, and to a milk line 22 through a second conduit 23. The means 8, 19, 20 for initiating a milking activity of the milking apparatus comprises a control unit, which, here, is identical with the previously described control unit 8, a pulsator device 19 provided in the first conduit 21, and a valve 20 provided in the second conduit 23. The control unit 8 is arranged to initiate the milking activity within a predetermined delay period as counted from receipt of such signal, or from an estimated time from the of the relief of the pulling force F generated by the milking cluster 4 on the flexible element 3. The control unit 8 is operably (by wire or wirelessly) connected to the pulsator device 19 provided in the first conduit 21 and to the valve 20 provided in the second conduit. To initiate a milking activity, the control unit 8 orders an activation of the pulsator device 19 and opening of the valve 20 provided in the second conduit 23.

The operation milking apparatus, after initiation of its milking activity, may follow general principles used in contemporary milking apparatuses, using a milking meter for measuring total quantity of milk and instant milking rate. Milking activity is ended when a predetermined threshold value of the milking rate is obtained. Thereby, the action of the vacuum source on the milking cluster 4 is ended, whereby the milking cluster 4 leaves the udder of the cow and swings away to its inactive position suspended by the flexible element 3 of the milking cylinder unit. When the control unit 8 stops the milking activity, by ordering deactivation of the pulsator device 19 and closure of valve 20 provided in the second conduit 23, the control unit 8 is also arranged to close the air inlet valve 7 to the cylinder 1 and to open the control valve/pilot valve 9 such that the vacuum source 24 once again is in fluid communication with the cylinder 1 and able of providing a vacuum therein. Thereby, the piston 2 is displaced by the force generated thereon by the vacuum in a direction in which it pulls the flexible member 3 back into the cylinder 1 until the piston reaches a position in which it is locked and prevented from being displaced by the vacuum in cylinder. The milking cluster 4 is now once again hanging in a non-active position in which it is held by the flexible element 3.

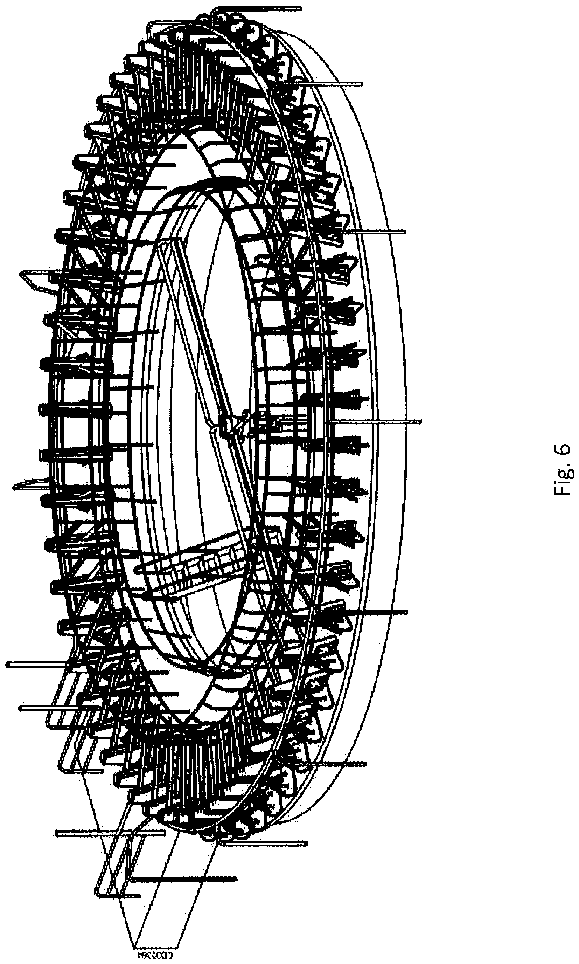

Fig. 6 shows a so called parallel rotary, in which there is provided a plurality of milking stations, each one of which may preferably be equipped with a milking cylinder unit and a milking apparatus according to the present invention. Cows move into the milking stations and an operator is expected to attach the milking cluster provided in each respective milking station to the udder of a cow that has entered that station. The milking cylinder unit of the present invention will enable reliable enablement of pull out of the flexible element from the respective cylinder as a response to a slight relief of the pulling force generated by the respective milking cluster on the respective flexible member. Such relief may be achieved by the operator applying a lifting force on the milking cluster before starting to pull the latter out of its associated cylinder.

## Claims

1. A milking cylinder unit comprising
- a cylinder (1),
- a piston (2), displaceably arranged in the cylinder (1),
- a flexible element (3), connected to the piston (2) and in one end connected to a milking cluster (4), wherein, in a non-active position of the cluster (4), the cluster (4) by its own weight generates a pulling force (F) on the flexible element (3),
- and at least one sensing element (5), wherein the sensing element (5) is arranged to detect a relief of the pulling force (F) on the flexible element (3) to trigger displacement of the piston (2) in the cylinder (1), **characterised in that** the sensing element (5) comprises a redirecting member (6) by which the flexible element (3) is supported and redirected, wherein the flexible element (3) applies a force (f) on the redirecting member (6) as a result of the pulling force (F) generated thereon by the cluster (4), and that said redirecting member (6) is separate from the piston (2) and arranged along the path of the flexible element (3) between the piston (2) and the end connected to the cluster (4).

2. A milking cylinder unit according to claim 1, **characterised in that**, along the path of the flexible element (3), between the redirecting member (6) and the piston (2) there is provided at least one further redirecting member (10, 11) by which the flexible element (3) is supported and redirected.

3. A milking cylinder unit according to claim 1 or 2, **characterised in that** the redirecting member (6) is moveably arranged, so as to move as a response to a relief of the pulling force (F) generated by the cluster (4) on the flexible element (3).

4. A milking cylinder unit according to claim 3, **characterised in that** the sensing element (5) comprises a sensor (13) that senses a motion of the redirecting member (6) caused by a relief of the pulling force (F) generated by the cluster (4) on the flexible element (3).

5. A milking cylinder unit according to claim 4, **characterised in that** the redirecting member (6) is movable in a direction towards and away from the sensor (13).

6. A milking cylinder unit according to any one of claims 3-5, **characterised in that** the sensing element (5) comprises a biasing member (15) exerting a biasing force on the redirecting member (6) counteracting the force (f) applied by the flexible element (3) on the redirecting member (6).

7. A milking cylinder unit according to any one of claims 3-6, **characterised in that** the redirection member is movably arranged by being slideably arranged in guide (16) in a mounting member (17), in which the redirecting member (6) is mounted.

8. A milking cylinder unit according to any one of claims 1-7, **characterised in that** the redirecting member (6) is mounted in a mounting member (17)attached to said cylinder (1) on the outside thereof.

9. A milking cylinder unit according to any one of claims 1-7, **characterised in that** the redirecting member (6) is mounted in a mounting member (17) arranged at a distance from the cylinder (1) on the outside thereof.

10. A milking cylinder unit according to any one of claims 1-9, **characterised in that** the redirecting member (6) is a wheel the periphery of which supports and redirects the flexible element (3).

11. A milking cylinder unit according to any one of claims 1-10, **characterised in that** the milking cylinder (1) unit comprises a further redirecting member (12) provided between the redirecting member (6) and the end of the flexible element (3) that is connected to the cluster (4).

12. A milking cylinder unit according to claim 11, **characterised in that** the further directing member (12) defines a fixed point with regard to the redirecting member (6), from which the flexible element (3) extends towards the cluster (4).

13. A milking cylinder unit according to any one of claims 1-12, **characterised in that** the cylinder (1) is connected to a vacuum source which provides a vacuum in the cylinder (1) that holds the piston (2) in a locked position as long as the pulling force (F) generated by the cluster (4) is not relieved, and that the cylinder (1) is provided with at least one air inlet valve (7), and means (8, 9) arranged to initiate opening of said valve (7) upon detection by the sensing element (5) of a relief of the pulling force (F) generated by the cluster (4) on the flexible element (3) and thereby to reduce said vacuum in the cylinder (1) and enable displacement of the piston (2) therein.

14. A milking apparatus, comprising a milking cylinder unit according to any one of claims 1-13, **characterised in that** it comprises a vacuum source (24) which is connected to said cluster (4), and means (8, 19, 20) for initiating a milking activity of said milking apparatus through the vacuum source (24) and the cluster (4) as an answer to a relief of the pulling force (F) generated by the cluster (4) on the flexible element (3) sensed by the sensing element (5).

## Patentansprüche

1. Melkzylindereinheit, Folgendes umfassend:
- einen Zylinder (1),
- einen Kolben (2), der in dem Zylinder (1) verschiebbar angeordnet ist,
- ein flexibles Element (3), das mit dem Kolben (2) verbunden und an einem Ende mit einem Melkzeug (4) verbunden ist, wobei, in einer nicht aktiven Position des Zeugs (4), das Zeug (4) durch sein eigenes Gewicht eine Zugkraft (F) auf das flexible Element (3) erzeugt,
- und wenigstens ein Sensorelement (5), wobei das Sensorelement (5) angeordnet ist, um eine Entlastung der Zugkraft (F) auf das flexible Element (3) zu erfassen, um eine Verschiebung des Kolbens (2) in dem Zylinder (1) auszulösen, **dadurch gekennzeichnet, dass** das Sensorelement (5) ein Umlenkelement (6) umfasst, durch das das flexible Element (3) gestützt und umgelenkt wird, wobei das flexible Element (3) eine Kraft (f) auf das Umlenkelement (6) als Ergebnis der durch das Zeug (4) erzeugten Zugkraft (F) darauf ausübt, und dass das Umlenkelement (6) von dem Kolben (2) getrennt und entlang des Pfades des flexiblen Elements (3) zwischen dem Kolben (2) und dem mit dem Zeug (4) verbundenen Ende angeordnet ist.

2. Melkzylindereinheit nach Anspruch 1, **dadurch gekennzeichnet, dass** auf dem Pfad des flexiblen Elements (3) zwischen dem Umlenkelement (6) und dem Kolben (2) wenigstens ein weiteres Umlenkelement (10,11) bereitgestellt ist, durch das das flexible Element (3) gestützt und umgeleitet wird.

3. Melkzylindereinheit nach Anspruch 1 oder 2, **dadurch gekennzeichnet, dass** das Umlenkelement (6) beweglich angeordnet ist, um sich als Reaktion auf eine Entlastung der von dem Zeug (4) auf das flexible Element (3) erzeugten Zugkraft (F) zu bewegen.

4. Melkzylindereinheit nach Anspruch 3, **dadurch gekennzeichnet, dass** das Sensorelement (5) einen Sensor (13) umfasst, der eine Bewegung des Umlenkelements (6) feststellt, die durch eine Entlastung der von dem Zeug (4) auf das flexible Element (3) erzeugten Zugkraft (F) verursacht wird.

5. Melkzylindereinheit nach Anspruch 4, **dadurch gekennzeichnet, dass** das Umlenkelement (6) in einer Richtung zu dem und weg von dem Sensor (13) beweglich ist.

6. Melkzylindereinheit nach einem der Ansprüche 3-5, **dadurch gekennzeichnet, dass** das Sensorelement (5) ein Vorspannelement (15) umfasst, das eine Vorspannkraft auf das Umlenkelement (6) ausübt, die der durch das flexible Element (3) auf das Umlenkelement (6) ausgeübten Kraft (f) entgegenwirkt.

7. Melkzylindereinheit nach einem der Ansprüche 3-6, **dadurch gekennzeichnet, dass** das Umlenkelement beweglich angeordnet ist, indem es in einer Führung (16) in einem Befestigungselement (17) verschiebbar angeordnet ist, in dem das Umlenkelement (6) befestigt ist.

8. Melkzylindereinheit nach einem der Ansprüche 1-7, **dadurch gekennzeichnet, dass** das Umlenkelement (6) in einem Befestigungselement (17) befestigt ist, das an der Außenseite des Zylinders (1) an diesem befestigt ist.

9. Melkzylindereinheit nach einem der Ansprüche 1-7, **dadurch gekennzeichnet, dass** das Umlenkelement (6) in einem Befestigungselement (17) befestigt ist, das in einem Abstand von dem Zylinder (1) an dessen Außenseite angeordnet ist.

10. Melkzylindereinheit nach einem der Ansprüche 1-9, **dadurch gekennzeichnet, dass** das Umlenkelement (6) ein Rad ist, dessen Umfang das flexible Element (3) stützt und umlenkt.

11. Melkzylindereinheit nach einem der Ansprüche 1-10, **dadurch gekennzeichnet, dass** die Melkzylindereinheit (1) ein weiteres Umlenkelement (12) umfasst, das zwischen dem Umlenkelement (6) und dem Ende des flexiblen Elements (3), das mit dem Zeug (4) verbunden ist, bereitgestellt wird.

12. Melkzylindereinheit nach Anspruch 11, **dadurch gekennzeichnet, dass** das weitere Lenkelement (12) einen festen Punkt in Bezug auf das Umlenkelement (6) definiert, von dem aus sich das flexible Element (3) zu dem Zeug (4) hin erstreckt.

13. Melkzylindereinheit nach einem der Ansprüche 1-12, **dadurch gekennzeichnet, dass** der Zylinder (1) mit einer Vakuumquelle verbunden ist, die ein Vakuum in dem Zylinder (1) bereitstellt, der den Kolben (2) in einer verriegelten Position hält, solange die durch das Zeug (4) erzeugte Zugkraft (F) nicht entlastet wird, und dass der Zylinder (1) mit wenigstens einem Lufteinlassventil (7) versehen ist, und Mitteln (8, 9), die angeordnet sind, um das Öffnen des Ventils (7) einzuleiten, wenn das Sensorelement (5) eine Entlastung der Zugkraft (F) erfasst, die durch das Zeug (4) auf das flexible Element (3) erzeugt wird, und um dadurch das Vakuum in dem Zylinder (1) zu reduzieren und die Verschiebung des Kolbens (2) darin zu ermöglichen.

14. Melkvorrichtung, umfassend eine Melkzylindereinheit nach einem der Ansprüche 1-13, **dadurch gekennzeichnet, dass** sie eine Vakuumquelle (24), die mit dem Zeug (4) verbunden ist, und Mittel (8, 19, 20) zum Einleiten einer Melkaktivität der Melkvorrichtung durch die Vakuumquelle (24) und das Zeug (4) als Antwort auf eine Entlastung der Zugkraft (F), die durch das Zeug (4) auf das flexible Element (3) erzeugt wird, die durch das Sensorelement (5) festgestellt wird, umfasst.

## Revendications

1. Unité de cylindre trayeur comprenant
- un cylindre (1),
- un piston (2), agencé de manière déplaçable dans le cylindre (1),
- un élément souple (3), relié au piston (2) et relié à une extrémité à un faisceau trayeur (4), dans une position non active du faisceau (4), le faisceau (4) générant par son propre poids une force de traction (F) sur l'élément souple (3),
- et au moins un élément de détection (5), l'élément de détection (5) étant agencé pour détecter un soulagement de la force de traction (F) sur l'élément souple (3) pour déclencher le déplacement du piston (2) dans le cylindre (1), **caractérisée en ce que** l'élément de détection (5) comprend un organe de redirection (6) par lequel l'élément souple (3) est supporté et redirigé, l'élément souple (3) appliquant une force (f) sur l'organe de redirection (6) résultant de la force de traction (F) générée sur celui-ci par le faisceau (4), et que ledit organe de redirection (6) est séparé du piston (2) et agencé le long du trajet de l'élément souple (3) entre le piston (2) et l'extrémité reliée au faisceau (4).

2. Unité de cylindre trayeur selon la revendication 1, **caractérisée en ce que**, le long du trajet de l'élément souple (3), entre l'organe de redirection (6) et le piston (2), il est prévu au moins un autre organe de redirection (10, 11) par lequel l'élément souple (3) est supporté et redirigé.

3. Unité de cylindre trayeur selon la revendication 1 ou 2, **caractérisée en ce que** l'organe de redirection (6) est agencé de manière mobile, afin de se mouvoir en réponse à un soulagement de la force de traction (F) générée par le faisceau (4) sur l'élément souple (3).

4. Unité de cylindre trayeur selon la revendication 3, **caractérisée en ce que** l'élément de détection (5) comprend un capteur (13) qui détecte un mouvement de l'organe de redirection (6) provoqué par un soulagement de la force de traction (F) générée par le faisceau (4) sur l'élément souple (3).

5. Unité de cylindre trayeur selon la revendication 4, **caractérisée en ce que** l'organe de redirection (6) est mobile dans une direction s'éloignant et se rapprochant du capteur (13).

6. Unité de cylindre trayeur selon l'une quelconque des revendications 3 à 5, **caractérisée en ce que** l'élément de détection (5) comprend un organe de sollicitation (15) exerçant une force de sollicitation sur l'organe de redirection (6) contrecarrant la force (f) appliquée par l'élément souple (3) sur l'organe de redirection (6).

7. Unité de cylindre trayeur selon l'une quelconque des revendications 3 à 6, **caractérisée en ce que** l'organe de redirection est agencé de manière mobile en étant agencé de manière coulissante dans un guide (16) dans un organe de montage (17), l'organe de redirection (6) étant monté.

8. Unité de cylindre trayeur selon l'une quelconque des revendications 1 à 7, **caractérisée en ce que** l'organe de redirection (6) est monté dans un organe de montage (17) attaché audit cylindre (1) à l'extérieur de celui-ci.

9. Unité de cylindre trayeur selon l'une quelconque des revendications 1 à 7, **caractérisée en ce que** l'organe de redirection (6) est monté dans un organe de montage (17) agencé à distance du cylindre (1) à l'extérieur de celui-ci.

10. Unité de cylindre trayeur selon l'une quelconque des revendications 1 à 9, **caractérisée en ce que** l'organe de redirection (6) est une roue dont la périphérie supporte et redirige l'élément souple (3).

11. Unité de cylindre trayeur selon l'une quelconque des revendications 1 à 10, **caractérisée en ce que** l'unité de cylindre trayeur (1) comprend un autre organe de redirection (12) prévu entre l'organe de redirection (6) et l'extrémité de l'élément souple (3) qui est reliée au faisceau (4).

12. Unité de cylindre trayeur selon la revendication 11, **caractérisée en ce que** l'autre organe de direction (12) définit un point fixe par rapport à l'organe de redirection (6), à partir duquel l'élément souple (3) s'étend vers le faisceau (4).

13. Unité de cylindre trayeur selon l'une quelconque des revendications 1 à 12, **caractérisée en ce que** le cylindre (1) est relié à une source de vide qui fournit un vide dans le cylindre (1) qui maintient le piston (2) dans une position verrouillée tant que la force de traction (F) générée par le faisceau (4) n'est pas soulagée, et que le cylindre (1) est pourvu d'au moins une soupape d'entrée d'air (7), et de moyens (8, 9) agencés pour déclencher l'ouverture de ladite soupape (7) lors de la détection par l'élément de détection (5) d'un soulagement de la force de traction (F) générée par le faisceau (4) sur l'élément souple (3) et pour ainsi réduire ledit vide dans le cylindre (1) et permettre le déplacement du piston (2) à l'intérieur de celui-ci.

14. Appareil trayeur, comprenant une unité de cylindre trayeur selon l'une quelconque des revendications 1 à 13, **caractérisée en ce qu'**elle comprend une source de vide (24) qui est reliée audit faisceau (4), et des moyens (8, 19, 20) de déclenchement d'une activité de traite de ladite trayeuse à travers la source de vide (24) et le faisceau (4) en réponse à un soulagement de la force de traction (F) générée par le faisceau (4) sur l'élément souple (3) détecté par l'élément de détection (5).
